Europäisches Patentamt

European Patent Office

Office européen des brevets

(11) Veröffentlichungsnummer: **0 006 974**
**B1**

# EUROPÄISCHE PATENTSCHRIFT

(45) Veröffentlichungstag der Patentschrift:
26.08.81

(51) Int. Cl.³: **F 23 D 1/02**

(21) Anmeldenummer: **79101066.3**

(22) Anmeldetag: **07.04.79**

(54) **Kohlenstaubbrenner.**

(30) Priorität: **18.04.78 DE 2816674**

(43) Veröffentlichungstag der Anmeldung:
**23.01.80 Patentblatt 80/2**

(45) Bekanntmachung des Hinweises auf die Patenterteilung:
**26.08.81 Patentblatt 81/34**

(84) Benannte Vertragsstaaten:
**BE DE FR GB NL**

(56) Entgegenhaltungen:
**DE-A-2 733 226**
**DE-C-573 049**
**GB-A-264 563**
**GB-A-329 963**

(73) Patentinhaber: **Ruhrkohle Aktiengesellschaft,**
**Rellinghauser Strasse 1, D-4300 Essen 1 (DE)**

(72) Erfinder: **Brücker, Werner, Dr. Ing., Pfalzstrasse 17 a,**
**Düsseldorf (DE)**
Erfinder: **Greulich, Horst Siegfried, Ing. grad,**
**Bermaensfeld 195, Oberhausen (DE)**
Erfinder: **Jacobs, Jörn, Dr. Ing., Waldsaum 59, Essen (DE)**
Erfinder: **Schlütter, Alois, Dipl.-Ing., Rheinstrasse 42,**
**Kempen (DE)**
Erfinder: **Schmalfeld, Jörg, Dr. Ing., Merianstrasse 6,**
**6242 Kronberg (DE)**

Kohlenstaubbrenner

Die Erfindung betrifft einen Kohlenstaubbrenner mit von Luft durchströmtem Brennermantel, der den Flammraum umgibt und eine Trennwand zur Führung der Luft in der Weise aufweist, dass die Luft der Reihe nach den äusseren und den inneren Mantelteil axial durchströmt und anschliessend als Trägerluft Verwendung findet.

Derartige Kohlenstaubbrenner sind aus der DE-C-440035 bekannt. Die bei derartigen Brennern vorgesehene Verwendung der Kühlluft als Trägerluft bewirkt eine Erwärmung der Trägerluft und eine vorteilhafte Beeinflussung des Verbrennungsvorganges in dem Sinne, dass die Entwicklung der Flamme innerhalb des Brenners liegt. Infolgedessen kann der zu der Verbrennungsanlage gehörende Kessel besonders klein ausgelegt werden.

Der bekannte Brenner hat jedoch den Nachteil, dass sich bei der Verbrennung fein gemahlener, reaktionsträger Kohle Betriebsschwierigkeiten ergeben. Die Flamme erlischt und/oder die Verbrennungstemperatur sinkt so weit ab, dass es nur zu einer unvollständigen Verbrennung kommt.

Der Erfindung liegt daher die Aufgabe zugrunde, derartige Störungen zu beseitigen. Dabei geht die Erfindung von dem Gedanken einer Vorwärmung der Kohle aus, die auch Gegenstand des älteren Vorschlages DE-A-27 29 476 ist und in diesem Brenner stattfindet. Hier ist die Vorwärmung jedoch so gering, dass sie auf die Verbrennung reaktionsträger Kohle, wie beispielsweise Anthrazit-Kohlen, keinen merklichen Einfluss hat.

Nach der Erfindung wird eine ausreichende Vorwärmung durch eine besondere Erhitzung der Luft im Hohlmantel des Brenners und eine Erwärmung der Kohle mit der erhitzten Luft auf dem Wege der Kohle vom Bunker zum Brenner erreicht. Im einzelnen sind dazu folgende Massnahmen vorgesehen: Die aus dem Brennermantel austretende und als Trägerluft vorgesehene erhitzte Luft wird in die vom Bunker zum Brenner führende Staubgemischleitung geführt. Der Brenner ist so in den Feuerungsraum eingesetzt, dass der Brennermantel an seiner äusseren Mantelfläche der Feuerraumtemperatur ausgesetzt ist. Die Luft wird im Brennermantel auf wendelförmigen Bahnen durch Leitbleche geführt. Zur Regelung der Luft-Vorwärmung wird kalte Luft der Trägerluft so beigemischt, dass die Temperatur des Gemischs Kohlestaub-Trägerluft unterhalb der Zündtemperatur der Kohle liegt und die Kohleeintrittstemperatur 100 °C bis 200 °C beträgt.

In der Zeichnung ist ein Ausführungsbeispiel der Erfindung dargestellt. Es zeigen:
Figur 1 eine schematische Gesamtansicht eines Brenners.
Figur 2+3 Einzelheiten des Brenners nach Figur 1

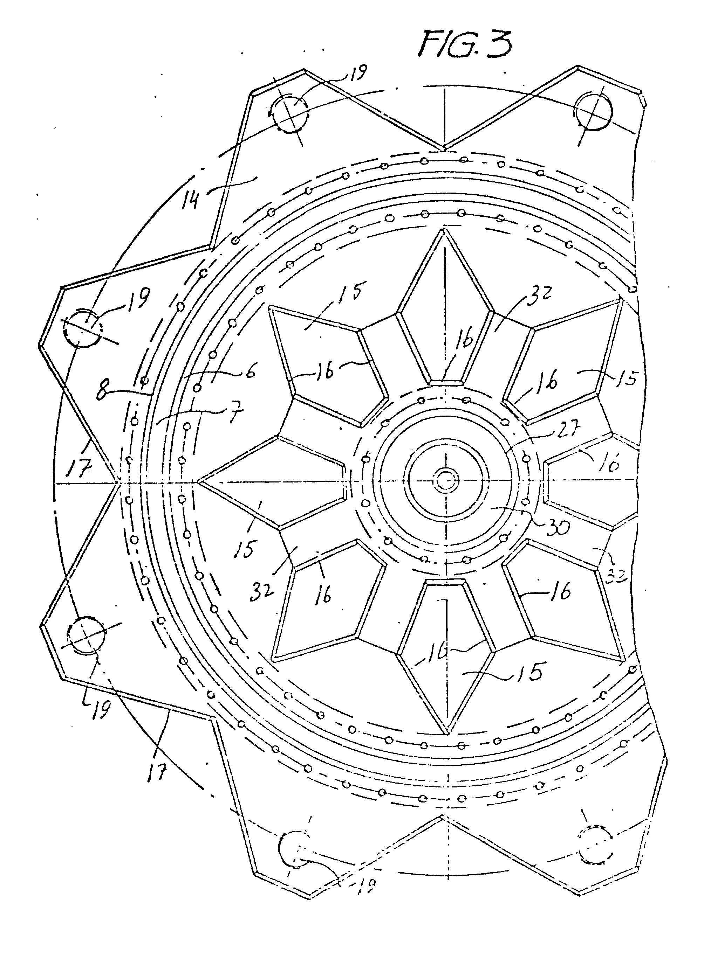

Figur 4+5 eine Kohlezuführung für den Brenner nach Figur 1–3

Der dargestellte Brenner besitzt eine Leistung von 5 MW. Das liegt in der Mitte des für derartige Brenner vorgesehenen Leistungsbereiches von 0,5 bis 10 MW.

Der Brenner besitzt einen zylindrischen, doppelwandigen Stahlmantel 1, dessen eines Ende 2 offen und dessen anderes Ende 3 geschlossen ist. Am oberen Ende 3 ist der doppelwandige Stahlmantel 1 mit zwei Stutzen 4 für die Zuführung von Kaltluft versehen. Die Kaltluft soll im Betriebsfall durch die Stutzen 4 in den Stahlmantel 1 eintreten und zunächst am äusseren Mantel 5 entlang bis zum unteren Ende 2 und dann am inneren Mantel 6 entlang zu einem Austrittsstutzen 7 strömen. Dabei verhindert ein Führungsblech 8 zwischen dem inneren Mantel 5 und dem äusseren Mantel 6 einen Kurzschlusstrom von den Stutzen 4 in den Austrittsstutzen 7. Neben dem Führungsblech 8 befinden sich noch Leitbleche 9 und 10 in dem doppelwandigen Stahlmantel 1. Das Leitblech 9 verläuft spiralförmig entlang der Innenseite des äusseren Mantels 6 und ist an dem Mantel 6 befestigt. Das Leitblech 10 verläuft gleichfalls spiralförmig, aber entlang der Innenseite des Führungsbleches 8. Das Leitblech 10 ist auch an dem Führungsblech 8 befestigt. Die Leitbleche 9 und 10 geben der durch den doppelwandigen Stahlmantel 1 strömenden Luft eine spiralförmige Strömung. Eine entgegengesetzte Steigung beider Leitbleche 9 und 10 erlaubt eine gleichbleibende Drallrichtung der Luftströmung zwischen dem äusseren Mantel 6 und dem Führungsblech 8 bzw. dem inneren Mantel 5 und dem Führungsblech 8. Eine Umkehrung der Drallrichtung wäre mit einem erheblichen Strömungsverlust verbunden. Die Leitbleche 9 und 10 bilden eingängige Spiralen, sie können aber auch als mehrgängige Spiralen ausgebildet sein.

Der Austrittsstutzen 7 resultiert aus einer Verlängerung des inneren Mantels 5 und des Führungsbleches 8 über das obere Ende 3 hinaus.

Der Stahlmantel bildet mit den Stutzen 4, den Mänteln 5 und 6, dem Austrittsstutzen 7, dem Führungsblech 8 und den Leitblechen 9 und 10 eine Schweisskonstruktion. Innen ist der Stahlmantel 1 mit einer keramischen Auskleidung 11 versehen. Der von der keramischen Auskleidung 11 umschlossene, bis auf das obere Ende zylindrische Hohlraum ist der Flammenraum. Die keramische Auskleidung besteht teilweise aus Aluminiumoxyd bzw. Siliziumkarbit. Im Falle einer Verwendung von Siliziumkarbit beträgt der Anteil der dieses Stoffes mind. 20 und höchstens 95%. Anstelle der genannten Bestandteile können auch andere Bestandteile treten. Ferner kommt auch eine andere Auskleidung als eine keramische in Betracht.

Der sich aus dem Stahlmantel 1 und der keramischen Auskleidung 11 ergebende Brennerdurchmesser beträgt 1200 mm, gleichzeitig hat der Brenner eine Länge von 2000 mm. Dadurch ergibt sich ein Verhältnis der Brennerleistung von 0,5 MW pro m³ Flammenraum. Dieser Wert liegt innerhalb des zulässigen Bereiches von 0,3 bis 0,7 MW pro m³. Der Bereich kennzeichnet eine relativ geringe Feuerraumbelastung und hat ein stabiles Feuerungsverhalten zur Folge. Ein instabiles Feuerungsverhalten stellt sich mit einiger Sicherheit bei einer Belastung von 2 MW/m³ und mehr ein. Alle in diesem Zusammenhang genannten Feuerraumbelastungen sind auf 1 bar und 1 Stunde bezogen.

Die nach Durchströmen des Stahlmantels 1 aus dem Austrittsstutzen 7 austretende Luft gelangt in eine Verteilerdecke 12. Die Verteilerdecke 12 ist mit dem Austrittsstutzen 7 verschraubt und besteht aus zwei sternförmigen Blechen 13 und 14, von denen das untere in der Schnittdarstellung entlang der Schnittlinie III/III in Fig. 2 in Fig. 3 dargestellt ist. Die Bleche 13 und 14 besitzen innerhalb des von dem Austrittsstutzen 7 umschlossenen Bereiches eine Vielzahl gleichmässig am Umfang verteilter Ausnehmungen 15. Am Rand der Ausnehmungen 15 ist der Zwischenraum zwischen den beiden Blechen 13 und 14 durch Stege 16 dicht verschlossen. Desgleichen ist der Zwischenraum zwischen den Blechen 13 und 14 an deren äusserem Rand durch Stege 17 dicht verschlossen. Die Bleche 13 und 14 bilden mit den Stegen 16 und 17 eine Schweisskonstruktion. Die Ausnehmungen 15 in der geschweissten Verteilerdecke 12 dienen dem Zugang des Zwischenraumes 18 zwischen der Verteilerdecke 12 und dem oberen Ende 3 des Stahlmantels 1. Statt der gewählten, rhombenähnlichen Form kann auch eine runde Form für die Ausnehmungen 15 gewählt werden. Die runde Form hat erhebliche Fertigungsvorteile. Das gleiche gilt für einen runden Rand der Verteilerdecke 12 statt des in Fig. 3 dargestellten sternförmigen Randes. Andererseits besitzt der sternförmige Rand Spitzen, die sich als Trichter nutzen lassen. Eine solche Nutzung ist nach Fig. 3 vorgesehen, da sich in jeder Spitze eine Durchtrittsbohrung 19 befindet, die den Innenraum der Verteilerdecke 12 mit einem angeschweissten Rohrstutzen 20 verbindet.

Jeder Rohrstutzen 20 setzt sich über ein zwischengeschaltetes Stellventil 21 in einer Rohrleitung 22 fort. Stellventile sind für Brenner mit variablem Betrieb vorgesehen. Bei konstantem Betrieb erfolgt die Luftverteilung durch festgelegte Strömungsquerschnitte. Alle Rohrleitungen 22 sind aussen am Stahlmantel 1 entlanggeführt und besitzen an dem der Verteilerdecke 12 abgewandten vorderen Ende einen Krümmer 23, der in einer Düse 24 genau vor dem unteren Ende 2 des Stahlmantels 1 mündet. Die Düsen 24 sind unter dem Winkel von 70° zu Längsachse des Stahlmantels 1 radial gegen die Längsachse gerichtet. Der Winkel von 70° liegt innerhalb eines zulässigen Winkelbereiches von 60 bis 80°. Wenn die Düsen 24 genau auf die Längs- und Mittelachse des Stahlmantels 1 zeigen, ist der Winkel zwischen der Düsenmittelachse und dem durch die Mittel- und Längsachse des Stahlmantels 1 und die Düsenmitte gehenden Radius 0°. Im Bedarfsfall können die Düsen 24 aber auch an der Längs- und Mittelachse des Stahlmantels 1 vorbeizeigen. Dabei ist ein Winkel von 30° zwischen der Düsenmittelachse und dem die Düsenmitte schneidenden Radius noch zulässig. Die Rohrleitungen 22 sind durch Stege 25 und einen Brennerflansch 26, der zugleich den Stahlmantel 1 umschliesst, am Stahlmantel 1 gehalten. Mit dem Brennerflansch 26 wird der Brenner an einem nicht dargestellten Kessel montiert. Dann ragt er mit seinem vorderen Ende 2 bis zum Brennerflansch 26 in den Feuerungsraum des Kessels. Im Unterschied zu anderen Brennern, herkömmlichen Front- oder Deckenbrenner, deren Brennstoffeintritt im wesentlichen mit der Kesselwandung in einer Ebene liegt, besitzt der erfindungsgemässe Brenner innerhalb des Stahlmantels 1 und der keramischen Auskleidung 11 einen gegenüber dem übrigen Feuerungsraum des Kessels abgeschlossenen, geschützten Flammenraum oder Flammentunnel.

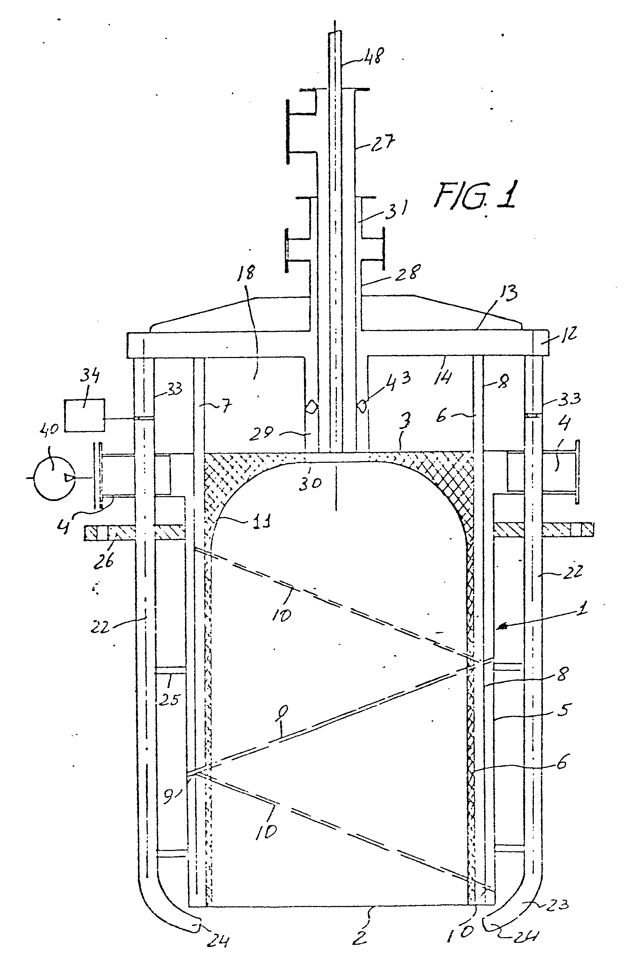

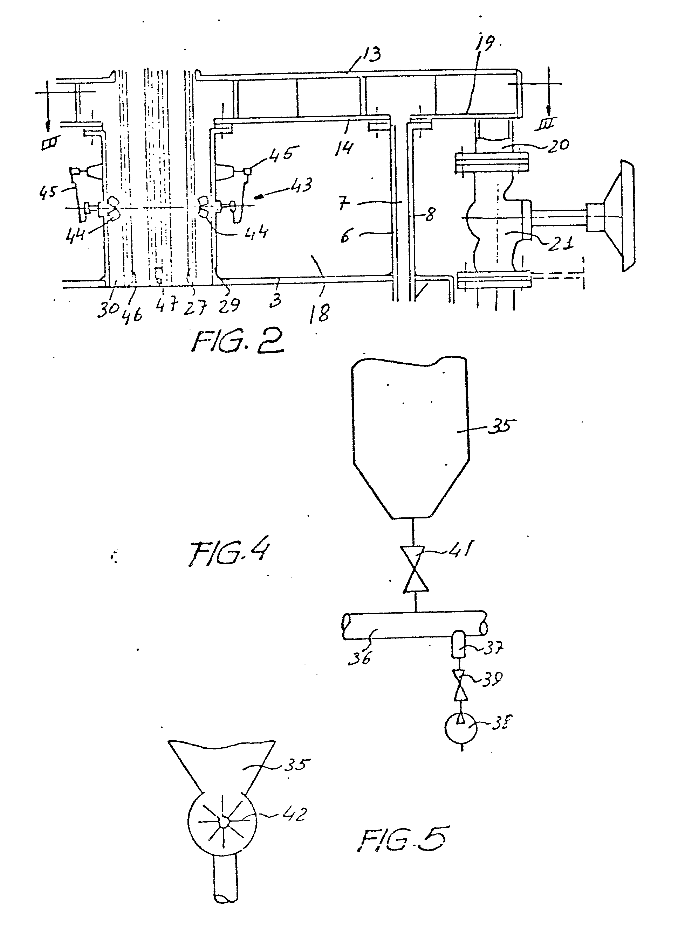

Bei dem Brenner nach Fig. 1 bis 3 wird der Brennstoff in Form eines Staub/Luft-Gemisches durch eine zentrische, am oberen Ende des Stahlmantels 1 mündende Rohrleitung 27 in den Flammenraum eingetragen. Die Rohrleitung 27 wird oberhalb der Verteilerdecke 12 im Abstand von einer weiteren, mit der Verteilerdecke 12 verschweissten Rohrleitung 28 umgeben. Unterhalb der Verteilerdecke 12 ist die Rohrleitung 27 in noch grösserem Abstand von einer dritten, mit dem oberen Ende 3 des Stahlmantels 1 verschweissten Rohrleitung 29 umgeben. Zwischen den Rohrleitungen 27 und 29 besteht dadurch eine in den Flammenraum führende und mit der Verteilerdecke 12 verbundene Ringleitung 30. Oberhalb der Verteilerdecke 12 besteht gleichfalls eine mit 31 bezeichnete Ringleitung. Die Ringleitung 31 wird durch die Rohrleitungen 27 und 28 gebildet und ist wie die Ringleitung 30 mit der Verteilerdecke 12 verbunden. Das heisst, die aus dem Austrittsstutzen 7 austretende Luft wird durch die Verteilerdecke 12 in verschiedener Weise aufgeteilt. Sie gelangt in die in Düsen 24 mündenden Rohrleitungen 22, die Ringleitung 30 und die Ringleitung 31. Die Zuführung von Luft in die Ringleitungen 30 und 31 wird dadurch erleichtert, dass die Ausnehmungen 15 jeweils so in der Verteilerdecke angeordnet sind, dass die mit 32 bezeichneten Durchtrittsöffnungen zwischen zwei benachbarten Ausnehmungen 15 jeweils einer Durchtrittsbohrung 19 gegenüberliegen und die Stege 16 der Ausnehmungen 15 einen Trichter bilden. Es liegen sich dann die zu den Durchtrittsbohrungen 19 und den Durchtrittsöffnungen 32 gehörenden Trichter, wie in Fig. 3 dargestellt, jeweils genau gegenüber, so dass die aus dem Austrittsstutzen 7 austretende Luft optimal in die Durchtrittsbohrungen 19 und die Durchtrittsöffnungen 32 geleitet wird.

In der Verteilerdecke 12 findet eine Verteilung in bestimmten Verhältnissen statt. 10 bis 30% der am Austrittsstutzen 7 anfallenden Luftmenge gelangt in die Ringleitung 31, 25 bis 50% dieser Gesamtluftmenge gelangt in die zu den Düsen 24 führenden Rohrleitungen 22. Der Rest tritt durch die Ringleitung 30 in den Flammenraum ein. Diese Verteilung lässt sich durch Regelglieder in den verschiedenen Leitungen durch Klappen und/ oder Ventile, wie sie beispielsweise mit den Stellventilen 21 vorgesehen sind, regeln. Der Regelbereich soll jedoch möglichst klein sein, um die mit grossen Regelbereichen einhergehenden und aus konstruktiven Gründen resultierenden Strömungsverluste gering zu halten. Deshalb ist ein max. Regelbereich von 1 zu 2,5 vorgesehen. Ausserdem soll die Regelung des Luftstromes nach Fig. 1 bis 3 möglichst in einem Leitungsbereich, an den Stellventilen 21 der Rohrleitungen 22, stattfinden. Die Regelung erfolgt nach Messung der Durchtrittsgeschwindigkeit in den Rohrleitungen 22. Dazu sind Messblenden 33 in die Rohrleitungen 22 eingebaut. Die Messblenden 33 stehen mit Anzeigevorrichtungen 34 in Wirkverbindung. Anhand der angezeigten Werte werden bei Abweichung von vorgegebenen Sollwerten die Stellventile 21 von Hand nachgeregelt. Im übrigen sollen die Stellventile wie alle anderen ggf. vorgesehenen Ventile und Klappen zur Luftregelung sowohl während des eigentlichen Brennerbetriebes als auch während des Anfahrbetriebes konstant bleiben. Im Ausführungsbeispiel soll die Geschwindigkeit in den Rohrleitungen 22 bei Verbrennung von Anthrazitstaub in einer Menge von 600 kg/h 80 m/Sek. betragen. Diese Geschwindigkeit entspricht einem Luftmengenanteil von 35% an der Gesamtluftmenge. Bei einem Luftmengenanteil von 15% in der Ringleitung 31 und 50% in der Ringleitung 30 sind Luftgeschwindigkeiten von 15 m/Sek. in der Rohrleitung 27 und 50 m/Sek. in der Ringleitung 30 vorgesehen. Das liegt in den als vorteilhaft ermittelten Bereichen von 10 bis 20 m/Sek. in der Rohrleitung 27 und dem zwei - bis vierfachen dieser Geschwindigkeit in der Ringleitung 30 und dem fünf- bis siebenfachen dieser Geschwindigkeit in den Rohrleitungen 22. Die max. Luftgeschwindigkeit liegt damit etwa bei 100 m/Sek.

Die Temperatur der in die Verteilerdecke 12 tretenden Luft liegt bei einem Brennerbetrieb dicht unterhalb der höchst zulässigen Brennertemperatur von 1350 °C nach einer Eintrittstemperatur von 20 °C in der Grössenordnung von 400 °C. Mit dieser Temperatur strömt die warme Luft durch die Ringleitung 31 in Rohrleitungen 36, die zu Bunkern 35 führen. Die Rohrleitungen 36 sind an seitlich an der Rohrleitung 28 angeschweissten Flanschen befestigt. Die in die Rohrleitungen 36 strömende Luft ist als Primärluft zu bezeichnen. Dieser 400 °C warmen Primärluft wird vor Erreichen jedes Bunkers 35 20 °C warme Primärluft im Verhältnis 70 zu 30 beigemischt, wobei die 20 °C warme Primärluft den grösseren Anteil stellt. Die 20 °C warme Primärluft wird mit einem Gebläse 38 über ein Regelventil 39 und einen Stutzen 37 in die jeweilige Rohrleitung 36 geblasen. Mit dem Regelventil 39 wird der jeweils notwendige Kaltluftanteil eingestellt. Das Gebläse 38 gewährleistet eine ausreichende Luftversorgung. Das heisst, die Lufteinspeisung erfolgt zwangsweise ebenso wie in die Stutzen 4 des Stahlmantels 1. In Fig. 1 ist das dem Stutzen 4 zugehörende Gebläse 40 schematisch dargestellt. Wahlweise kann anstelle der verschiedenen Gebläse 38 und 40 auch ein gemeinsames Gebläse mit einer geeigneten, nachgeschalteten Luftverteilung eingesetzt werden.

Durch die Zuführung von niedrig temperierter Luft in die Rohrleitung 36 wird die 400 °C warme Primärluft soweit herabgekühlt, dass sie beim Zusammentreffen mit aus den Bunkern 35 über eine Regelvorrichtung 41 in die Rohrleitung 36 gelangendem Kohlenstaub eine unterhalb der Zündtemperatur des Kohlenstaubes liegende Temperatur erreicht hat. Diese Temperatur soll dicht oberhalb der gewünschten Eintrittstemperatur des Kohlestaub/Luftgemisches in die Rohrleitung 27 liegen. Das wird durch einen Wärmeverlust verhindernden geringen Abstand der Kohlebunker 35 von der Rohrleitung 27 und/oder durch eine Wärmedämmung der Rohrleitung 36 erreicht. Die Austrittstemperatur aus der in gleicher Weise an der Rohrleitung 27 wie an der Rohrleitung 28 befestigten Rohrleitung 36 bzw. die Eintrittstemperatur des Kohlestaub/Luftgemisches in die Rohrleitung 27 beträgt 160 °C und liegt innerhalb des zulässigen Bereiches zwischen 100 und 200 °C.

Die Regelvorrichtung 41 bewirkt die Dosierung des Brennstoffvorrates aus dem Tagesbunker in die Rohrleitung 36. Sie wird auf einen etwa 900 g/m³ entsprechenden Staubsättigungsgrad des Kohlestaub/Luftgemisches eingeregelt.

Zur gewünschten Kohlestaubbeimengung kann ggf. die Verwendung eines einfachen Durchflussregelventils als Regelvorrichtung 41 ausreichen. Bei grösseren Anforderungen an die Dosiergenauigkeit sind beispielsweise Zwangsförderer vorgesehen, die zwangsweise Kohlestaubportionen aus einem Bunker 35 in die Rohrleitung 36 fördern. Eine solche Dosiervorrichtung kann ein Flügelrad 42 sein, das am unteren, trichterförmigen Ende eines Bunkers 35 montiert und entsprechend seiner einstellbaren Drehzahl zwischen seinen Flügeln genau vorbestimmte Portionen Kohlestaub nach unten in die Rohrleitung 36 fördert.

Das aus der Rohrleitung 27 in den Flammenraum austretende Kohlestaub/Luftgemisch wird von einem ringförmigen, aus der Ringleitung 30 austretenden und im folgenden als Sekundärluft bezeichneten Luftstrom umgeben. Die Sekundärluft ist wie die in die Ringleitung 31 strömende Luft 400 °C warm und wird mit einem Drallapparat 43 in eine spiralförmige Bewegungsbahn um den austretenden Kohlestaub/Luftstrom versetzt. Der Drallapparat 43 besteht aus einer Anzahl gleichmässig in der Ringleitung 30 verteilt angeordneter, schwenkbar in den Rohrleitungen 27 und 29 gelagerter Leitbleche 44 und einer Arretierung 45. Die Leitbleche 44 haben eine dem ringförmigen Querschnitt der Ringleitung 30 angepasste Form und können derart verschwenkt werden, dass die Sekundärluft in der Ringleitung 33 je nach Einstellung eine Verdrallung von 10° bis 80° erfährt. Dabei ist es vorteilhaft, einen möglichst kleinen Regelbereich für die Leitbleche 44 zu wählen, damit die Leitbleche 44 die Ringleitung 30 möglichst schliessend ausfüllen.

Die Arretierung 45 erfolgt beispielsweise mit drehbeweglich an der Rohrleitung 29 angeordneten Stangen, die in eine jeweils in eine bestimmte Arretierungsstellung gelangende Bohrung einer Vielzahl von Bohrungen eines auf jeder Leitblechwelle sitzenden Bundes gesteckt werden. Das geschieht von Hand durch die Ausnehmungen 15 in der Verteilerdecke 12 hindurch. Um trotz der während des Betriebes auftretenden Wärme und Verbrennungsgefahr eine Verstellung des Drallapparates 43 zu bewirken, können die Leitblechwellen wahlweise auch mit Kettenrädern versehen sein, die dann mit einem Kettentrieb durch die Ausnehmungen 15 hindurch von einer ungefährlichen Stelle aus verstellt werden. Anstelle des Kettentriebes kommen auch andere mechanische Getriebe in Betracht.

Ferner können statt des Drallapparates 43 eine Anzahl spiralförmig um die Rohrleitung 27 herum angeordneter Düsen zum Einsatz gelangen.

Der aus der Rohrleitung 27 austretende Kohlestaub/Luftstrom, der zusätzlich durch gleichmässig verteilt an der Innenseite der Rohrleitung 27 angeordnete und in Rohrlängsrichtung verlaufende Leitbleche 46 gerichtet ist, ist gradlinig und drallfrei. Dagegen bewegt sich der aus der Ringleitung 30 austretende Sekundärluftstrom entsprechend der Einstellung des Drallapparates mit einer mehr oder weniger grossen Verdrallung. Betrachtet man den Sekundärluftstrom und den Kohlestaub/Luftstrom als Gesamtstrom, so beträgt der verdrallte Anteil mindestens 30% und höchstens 90%. Diese Verdrallung kann auch in anderer Weise, z.B. ohne Verdrallung des Sekundärluftstromes durch Verdrallung des Kohlestaub/Luftgemisches herbeigeführt werden. Bei der im Ausführungsbeispiel gewählten Lösung ergeben sich jedoch besonders günstige Verhältnisse. Durch die verdrallte Sekundärluft werden die leichteren Partikel des Kohlestaub/Luftstromes gleichfalls in eine stark spiralförmige Bahn gebracht, während der Einfluss auf die schweren Kohlestaubpartikel geringer ist. Die leichteren Kohlestaubpartikel werden bei ihrer stark spiralförmigen Bahn infolge der wirksam werdenden Zentrifugalkraft nach aussen in die Nähe der keramischen Auskleidung 11 gebracht. In der Nähe der keramischen Auskleidung 11 sind die Kohlestaubpartikel besonders stark der Wärme ausgesetzt, die sich dort während des Verbrennungsvorganges gesammelt hat. Das fördert ein Entflammen der Kohlestaubpartikel, wenn die Flamme von dem Brennstoffeintritt in den Flammenraum abgerissen ist. Diese Wirkung ergänzt sich mit der aus der längeren Verweilzeit brennender Kohlestaubpartikel in dem Flammenraum resultierenden Wirkung und der Vorwärmung der Kohle. Infolge der längeren Verweilzeit besteht einige Sicherheit, dass die Flamme in dem Flammenraum des Stahlmantels 1 und der Auskleidung 11 nicht ganz erlischt, wenn es zu einem Abreissen der Flamme von dem Brennstoffeintritt kommt. Ein solches Abreissen kann beispielsweise durch eine Störung des Brennstoffzuflusses verursacht werden. Dann schlägt die sich noch in dem Flammenraum befindende Restflamme auf den Brennstoffeintritt zurück. Die vorteilhafte Wirkung der Verweilzeit nimmt mit der Dauer zu. Die Dauer der Verweilzeit hängt von dem Drallwinkel des Sekundärluftstromes ab. Andererseits verursacht ein starker Drallwinkel einen erheblichen Strömungsverlust. Daher ist die Verweilzeit mit den sich aus den Strömungsverlusten ergebenden Nachteilen zu optimieren.

Neben der Verweilzeit und der Wärmewirkung der Auskleidung, die im Hinblick auf die Einhaltung der Betriebstemperatur von etwa 1350 °C ein bestimmtes Mass nicht überschreiben darf und deshalb mit einer zwischen 200 und 300 Watt pro m² und Grad Kelvin liegenden Kühlleistung mit der durch den Stahlmantel 1 strömenden Kaltluft gekühlt wird, trägt die durch die warme Primärluft bewirkte gleichmässige Vorwärmung des Brennstoffes dadurch zur Verbrennung bei, dass lediglich noch eine relativ geringe Erwärmung erforderlich ist, um der Kohle die Zündtemperatur zu geben.

In dem Flammenraum findet die erste Stufe eines zweistufigen Verbrennungsvorganges statt. Diese erste Stufe ist durch Einstellung der Sekundärluft und Primärluft bzw. des zugeführten Kohlestaub/Luftgemisches, sowie durch die Verdrallung der Sekundärluft festgelegt. D.h. die Verdrallung und die Verweilzeit sind dieser Verbrennungsstufe anzupassen. In der ersten Verbrennungsstufe soll bis zum Austritt des Stahlmantels 1 und der Auskleidung 11 ein Ausbrand von $\alpha = 0,4 - 0,8$ stattfinden. $\alpha = 1$ würde einer 100%igen Verbrennung entsprechen. Im Ausführungsbeispiel ist ein Ausbrand an der oberen, zulässigen Grenze gewählt. Dieser Ausbrand wird durch eine unterstöchiometrische Verbrennung erreicht. Im Falle einer solchen Verbrennung wird nicht der entsprechend dem Molekularverhältnis des Brennstoffes notwendige Sauerstoff beigebracht. Dadurch tritt eine unvollständige Verbrennung ein, denn die Kohlestaubpartikel verbrennen nicht nacheinander, sondern alle gleichmässig. Es entsteht eine verzögerte Verbrennung, die eine Stickoxydbildung ($NO_x$) unterdrückt.

In der ersten Verbrennungsstufe tritt infolge der 1350 °C nicht überschreitenden Verbrennungstemperatur keine flüssige Schmelze auf. Es findet ein trockener Verbrennungsvorgang statt. Die teilweise verbrannten Kohlestaubpartikel sind weich. Die teilweise ausgebrannten, weichen Kohlepartikel verursachen gegenüber geschmolzenen und erstarrten Schlackenpartikeln eine sehr viel geringere Erosion an der Auskleidung des Brenners.

In der zweiten Stufe wird ausserhalb des von dem Stahlmantel 1 und der Auskleidung 11 umschlossenen Raumes durch die Rohrleitungen 22 Tertiärluft zugeführt. Mit der Tertiärluft soll eine überstöchiometrische Verbrennung stattfinden, d.h. es soll ein Luftüberschuss erzeugt werden. Bei diesem Luftüberschuss ist eine wirtschaftliche Optimierung zwischen dem minimal zur vollständigen Verbrennung der Kohlepartikel notwendigen Luftstrom und einer vorteilhaften Wirkung eines starken Luftüberschusses bei einer nachfolgenden Wärmegewinnung durch in den Abgasstrom geschaltete Wärmetauscher zu treffen. Während ein Übermass an Rauchgas die Wärmegewinnung mit den nachgeschalteten Wärmetauschern erleichtert, erschwert sich die Bereitstellung der zur Erzeugung der gewünschten Rauchgasmenge notwendigen Luftmenge mit grösser werdender Menge. Diese Erschwernisse resultieren u.a. aus den mit zunehmender Strömungsgeschwindigkeit überproportional wachsenden Strömungswiderständen. Das gilt insbesondere für die Strömungsverhältnisse in dem Stahlmantel 1, die u.a. durch die Durchflussquerschnitte und das durch die Steigung der Leitfläche 9 und 10 bestimmte Mass der Luftumlenkung bestimmt werden, wobei zu berücksichtigen ist, dass die Luft mit abnehmender Steigung bei gleichbleibender Strömungsgeschwindigkeit eine längere Verweilzeit in dem Stahlmantel 1 hat und dadurch eine zunehmende Erwärmung erfährt. Im übrigen dienen die Leitbleche dazu, der Luft eine Zwangsführung zu allen Umfangsstellen des Stahlmantels zu geben, um punktuelle oder streifenförmige Überhitzungen zu verhindern.

Mit Hilfe der Düsen 24 und eines ggf. unterschiedlich gestalteten Tertiärluftstromes kann die Flamme vor dem Stahlmantel 1 in beliebiger Weise der Geometrie des zugehörenden Kessels angepasst werden. Anpassung heisst beispielsweise Verlängerung oder Verbreiterung oder Umlenkung.

Sofern die Düsen 24 an der Längs- und Mittelachse des Stahlmantels 1 vorbeizeigen, ist vorgesehen, dass die austretende Tertiärluft in Bewegungsrichtung und nicht entgegen der Bewegungsrichtung des aus dem Stahlmantel 1 austretenden, spiralförmig umlaufenden Staub/Luftgemisches in dieses eintritt. Damit wird eine Vernichtung von Bewegungsenergie vermieden. Gleichwohl findet eine zur vollständigen Verbrennung der Kohlepartikel ausreichende Vermischung mit dem Tertiärluftstrom statt.

Im Ausführungsbeispiel wird Anthrazitstaub in einer Menge von 600 kg/Stunde eingesetzt. Der Anthrazitstaub hat einen Heizwert von 30.000 GJ/kg. Seine Mahlfeinheit ist zu 95% kleiner als 0,02 mm. Das ist weit unterhalb des zulässigen Bereiches von 0,05 mm. Der Anteil flüchtiger Bestandteile des Anthrazitstaubes ist 8% in rohem Zustand. Der Wassergehalt ist 1%, gleichfalls bezogen auf den Rohzustand und damit halb so gross wie der zulässige Wassergehalt. Der Aschegehalt beträgt 15%. Damit handelt es sich um übliche, reaktionsträge Anthrazitkohle, deren Zündtemperatur in Abhängigkeit vom Anteil flüchtiger Bestandteile bei ca. 400 °C liegt. Statt der Anthrazitkohle können auch beliebige andere Magerkohlen eingesetzt werden, deren Stoffwerte dem Anthrazit entsprechend angepasst wurden.

Zum Inbetriebsetzen des Brenners mit der vorgesehenen Anthrazitkohle wird ein Zündbrenner 47 durch ein zentrisch in der Rohrleitung 27 angeordnetes Rohr 48 in den Flammenraum geschoben. Der Zündbrenner ist als Öl- oder Gasbrenner ausgebildet und besitzt eine Zündleistung von 10 % der Brennerleistung. Mit dem Zündbrenner 47 wird nach ausreichender Vorwärmung des Brenners das austretende Kohlestaub/Luftgemisch gezündet. Beim Zünden wird die Zuteileinrichtung, d.h. die Brennstoffdosierung, bis an die stöchiometrischen Bedingungen im Sekundärbereich, also in der zweiten Verbrennungsstufe, nachgeregelt. Das Hochfahren des Brenners kann dann vorteilhafterweise mit der gleichen Luftmengenverteilung wie beim Dauerbetrieb erfolgen. Es erleichtert die Brennerführung wesentlich. Teillast wird über die Kohlestaubdosierung und die Tertiärluftregelung gefahren.

In dieser Weise wird der Brenner auch betrieben, wenn statt Anthrazitkohle mit einem flüchtigen Gehalt von weniger als 10% Koks eingesetzt wird. Der Betrieb mit Koks ist sogar insofern leichter, als Staub mit grösseren Partikeln bis zu 0,15 mm eingesetzt werden kann.

Der erfindungsgemässe Brenner eignet sich besonders für Industriekessel, zur Fernwärmeerzeugung, für Brennkammern der Zementindustrie und andere industrielle Brennöfen. Er kann sowohl als Decken- wie auch als Frontbrenner eingesetzt werden. Durch die mögliche Einflussnahme auf die Flammengeometrie bietet sich der Brenner insbesondere für kurze Brennkammern an. Ferner ist er durch seine Eigenkühlung auch in ungekühlten Brennkammern einsetzbar und eignet sich in besonderer Weise für eine Baukastenbauweise.

## Patentansprüche

1. Kohlenstaubbrenner mit von Luft durchströmtem Brennermantel (1), der den Flammraum umgibt und eine Trennwand zur Führung der Luft in der Weise aufweist, dass die Luft der Reihe nach einen äusseren (5) und einen inneren Mantel (6) axial durchströmt und anschliessend als Trägerluft Verwendung findet, dadurch gekennzeichnet, dass

a) die erhitzte Trägerluft in die vom Bunker (35) zum Brenner führende Staubgemischleitung (36) am Bunkeraustritt eintritt,

b) der Brenner so in den Feuerungsraum eingesetzt ist, dass der Brennermantel (1) an seiner äusseren Mantelfläche der Feuerraumtemperatur ausgesetzt ist,

c) die Luft im Brennermantel (1) auf wendelförmigen Bahnen durch Leitbleche (9, 10) geführt ist und

d) zur Regelung der Luft-Vorwärmung kalte Luft als Trägerluft so beigemischt ist, dass die Temperatur des Gemischs Kohlestaub-Trägerluft unterhalb der Zündtemperatur der Kohle liegt und die Kohleeintrittstemperatur 100 °C bis 200 °C beträgt.

2. Kohlenstaubbrenner nach Anspruch 1, gekennzeichnet durch eine auf 400 °C erwärmte Kühlluft und eine Beimengung von 20 °C kalter Luft im Verhältnis 30:70 mit dem grösseren Anteil kalter Luft.

3. Kohlenstaubbrenner nach Anspruch 1 oder 2, dadurch gekennzeichnet, dass der Luftaustritt des Brennermantels (1) über die Staubgemischleitung (36) mit dem Bunker (35) und einer zwischengeschalteten Dosier-Vorrichtung (41) mit dem Brennereintritt (27) verbunden ist, wobei vor dem Bunker (35) eine Kaltluftleitung (32) in die Staubgemischleitung (36) einmündet.

## Claims

1. Coal dust burner with a burner casing (1) through which air flows, which surrounds the flame chamber and has a dividing wall for guiding the air in such a way that the air flows axially in series through an outer (5) and an inner (6) casing, and thereupon is employed as carrier air, characterised in that

a) the heated carrier air enters the dust mixture passage (36) leading from the bunker (35) to the burner, at the bunker outlet,

b) the burner is located in the firebox in such a way that the burner casing (1) is subjected to the firebox temperature on its outer surface,

c) the air in the burner casing (1) is directed by deflector plates (9, 10) along helical paths, and

d) for regulation of the preheating of the air, cold air is admixed as carrier air in such a way that the temperature of the coal dust/carrier air mixture lies below the ignition temperature of the coal and the coal entry temperature amounts to 100 °C to 200 °C.

2. Coal dust burner according to claim 1, characterised by cooling air heated to 400 °C and an admixture of 20 °C cold air in the ratio 30:70 with the greater part cold air.

3. Coal dust burner according to claim 1 or claim 2, characterised in that the air outlet of the burner casing (1) is connected with the burner inlet (27) via the dust mixture passage (36), with the bunker (35) and an interposed metering device (41), and a cold air passage (32) opens into the dust mixture passage (36) in front of the bunker (35).

## Revendications

1. Brûleur de charbon pulvérisé comprenant une enveloppe (1) qui est traversée par de l'air, entoure la chambre de flamme et présente une paroi séparatrice pour le guidage de l'air de manière que l'air traverse axialement successivement une enveloppe externe (5) et une enveloppe interne (6) et soit ensuite utilisé comme air porteur, caractérisé en ce que

a) l'air porteur chauffé pénètre à la sortie de la trémie dans le conduit de mélange pulvérisé (36) menant de la trémie (35) au brûleur,

b) le brûleur est introduit dans la chambre de combustion de façon que l'enveloppe de brûleur (1) soit soumise, sur sa surface d'enveloppe externe, à la température de la chambre de combustion,

c) l'air est guidé dans l'enveloppe de brûleur (1) par des tôles de guidage (9, 10) suivant des trajets de forme hélicoïdale, et

d) pour le réglage du chauffage préalable de l'air, de l'air froid est mélangé comme air porteur de façon que la température du mélange chrbon pulvérisé-air porteur soit inférieure à la température d'inflammation du charbon et que la température d'entrée du charbon soit de 100 °C à 200 °C.

2. Brûleur de charbon pulvérisé suivant la revendication 1, caractérisé par un air de refroidissement chauffé à 400 °C et par une addition d'air froid de 20 °C dans un rapport de 30/70, l'air froid formant la fraction la plus grande.

3. Brûleur de charbon pulvérisé suivant l'une ou l'autre des revendications 1 et 2, caractérisé en ce que la sortie d'air de l'enveloppe de brûleur (1) est reliée, par l'intermédiaire du conduit de mélange pulvérisé (36) muni de la trémie (35) et d'un dispositif de dosage intercalé (41), à l'entrée du brûleur (27), un conduit d'air froid (32) débouchant dans le conduit de mélange pulvérisé (36) en amont de la trémie (35).

FIG. 1

FIG. 2

FIG. 4

FIG. 5

FIG. 3